(19) Europäisches Patentamt / European Patent Office / Office européen des brevets

(11) **EP 2 742 773 B1**

(12) **FASCICULE DE BREVET EUROPEEN**

(45) Date de publication et mention
de la délivrance du brevet:
**31.10.2018 Bulletin 2018/44**

(21) Numéro de dépôt: **12744017.0**

(22) Date de dépôt: **10.08.2012**

(51) Int Cl.:
*B22C 9/06* *(2006.01)*     *B29C 33/02* *(2006.01)*
*H05B 6/14* *(2006.01)*     *B29C 35/08* *(2006.01)*
*B29C 33/06* *(2006.01)*     *H05B 6/06* *(2006.01)*
*H05B 6/10* *(2006.01)*

(86) Numéro de dépôt international:
**PCT/EP2012/065734**

(87) Numéro de publication internationale:
**WO 2013/021055 (14.02.2013 Gazette 2013/07)**

(54) **DISPOSITIF POUR L'AJUSTEMENT DU FACTEUR QUALITÉ D'UN SYSTÈME DE CHAUFFAGE PAR INDUCTION NOTAMMENT UN MOULE À CHAUFFAGE AUTONOME**

VORRICHTUNG ZUR EINSTELLUNG DES QUALITÄTSFAKTORS EINES INDUKTIONSERHITZUNGSSYSTEMS, INSBESONDERE EINER FORM MIT UNABHÄNGIGER ERWÄRMUNG

DEVICE FOR ADJUSTING THE QUALITY FACTOR OF AN INDUCTION HEATING SYSTEM, IN PARTICULAR A MOLD WITH SELF-CONTAINED HEATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2011 FR 1157289**

(43) Date de publication de la demande:
**18.06.2014 Bulletin 2014/25**

(73) Titulaire: **Roctool**
**73370 Le Bourget du Lac (FR)**

(72) Inventeurs:
• **GUICHARD, Alexandre**
**73310 La Chapelle du Mont du Chat (FR)**
• **FEIGENBLUM, José**
**73170 Saint-Paul (FR)**

(74) Mandataire: **Ipside**
**29, rue de Lisbonne**
**75008 Paris (FR)**

(56) Documents cités:
**WO-A1-2006/136743     US-A- 1 948 704**
**US-A- 3 153 132**

## Description

L'invention concerne un dispositif pour l'ajustement du facteur qualité d'un moule à chauffage autonome par induction.

Selon un mode de réalisation connu de l'art antérieur, décrit par exemple dans le document EP 1 894 442, un moule à chauffage autonome comprend deux corps de moule définissant une cavité de formage. Un tel moule peut être utilisé pour les opérations d'estampage ou pour des opérations de moulage à chaud. Au moins l'un des corps de moule comprend un système de chauffage autonome réalisé par des inducteurs. Selon cet exemple de réalisation de l'art antérieur, les inducteurs sont constitués de conducteurs électriques s'étendant dans des rainures ou des alésages, formant des cavités fermées, réalisés dans le corps de moule, lesquels rainures ou alésages définissent un trajet des inducteurs. Le trajet réalisé par ces inducteurs de même que leur nombre et leur répartition dans le corps de moule sont dictés par la forme de l'empreinte délimitant la cavité de formage et portée par le corps de moule concerné, la température à atteindre dans cette empreinte et la répartition de température visée dans ladite empreinte au cours du cycle d'estampage ou de moulage. Une partie du corps de moule est constituée d'un matériau ferromagnétique lequel est soumis à l'effet des inducteurs. Cette partie du corps de moule peut être le moule en entier, une partie seulement du volume de celui-ci, par exemple la partie du corps de moule dans laquelle les rainures ou les alésages sont pratiqués, ou encore être limitée au revêtement interne des rainures ou alésages dans lesquels se trouvent les inducteurs. Ledit moule est installé dans un environnement de production, par exemple sur les plateaux d'une presse. Il est alors connecté à un générateur de courant haute fréquence du commerce. Ledit générateur étant connecté aux inducteurs, le chauffage est obtenu en faisant circuler un courant électrique alternatif à haute fréquence dans lesdits inducteurs, lequel génère des courants induits provoquant l'échauffement de la partie ferromagnétique du moule qui monte en température et transmet cette chaleur par conduction à l'empreinte et finalement à la matière constituant la future pièce issue du moule

Un générateur de courant à haute fréquence fonctionne en mettant en résonance le circuit oscillant constitué par l'inducteur et la charge chauffée par celui-ci. Ces conditions permettent le rendement inductif optimal. Lorsque cette condition n'est pas respectée, l'énergie dispensée par le générateur est consommée par effet joule dans les conducteurs réalisant les inducteurs, cet effet ne provoquant pas ou trop peu de chauffage de la partie ferromagnétique. Ainsi, un tel manque d'efficacité énergétique soumet les inducteurs à des sollicitations thermiques importantes en regard de l'efficacité de chauffage du moule.

Le document US 1 948 704 décrit un dispositif de chauffage par induction adapté au traitement thermique d'une matière directement sollicitée par l'induction. Par exemple, ce dispositif est adapté au traitement thermique d'un ressort ou à la fusion d'un métal. La matière ainsi chauffée par induction est placée dans une bobine d'induction de caractéristiques connues. Les conditions de fonctionnement du générateur sont adaptées à ce dispositif de sorte que l'ensemble bobine et générateur constitue un circuit résonnant. L'introduction de la charge dans le circuit, et la modification au cours du traitement thermique des caractéristiques de la matière traitée, par la fusion de la matière ou sa montée en température au-delà du point de Curie, sont susceptibles d'écarter les conditions de fonctionnement du dispositif des conditions optimales. Ainsi le dispositif divulgué dans ce document de l'art antérieur comprend des inductances et des capacités variables pour adapter la réponse du générateur et tenter de rester toujours dans les conditions optimales.

Dans le cas d'un outillage à chauffage autonome, le circuit oscillant, dont la forme est imposée par des contraintes techniques diverses, n'est généralement pas résonnant. Ainsi, lorsqu'un tel outillage est connecté au générateur haute fréquence, dans de nombreux cas, le générateur ne peut simplement pas démarrer.

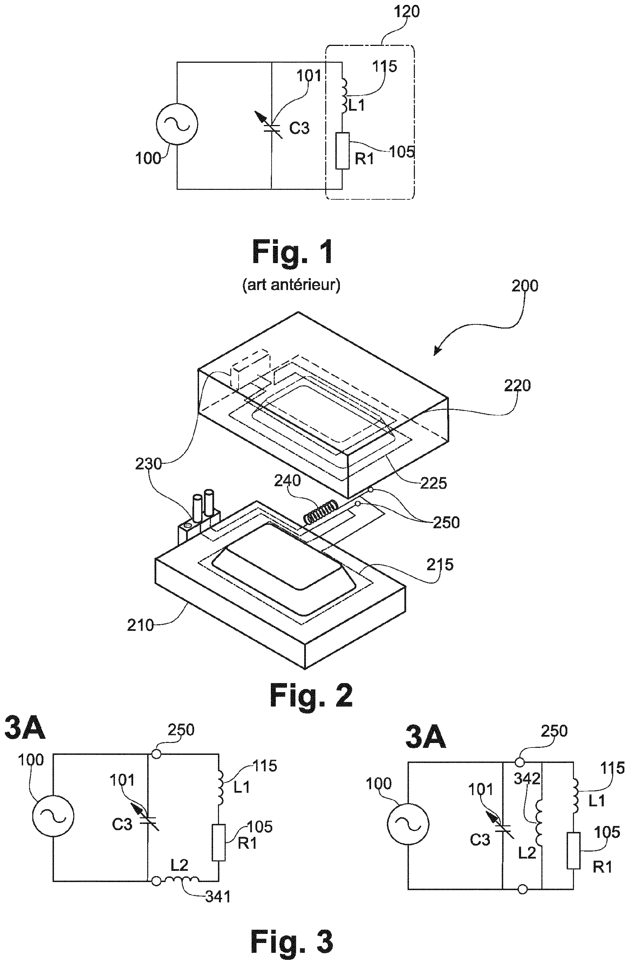

La figure 1 relative à l'art antérieur, montre le circuit électrique schématique d'un dispositif de chauffage par induction autonome. Le circuit outillage (120), correspondant aux inducteurs du corps de moule interagissant avec ledit outillage est caractérisé par une impédance Z1, combinant les résistances (105) et inductances (115) électriques équivalentes du corps de moule et des inducteurs, R1 et L1. Toujours selon l'art antérieur, un coffret de condensateurs (101), de capacité C3 réglable, est connecté au générateur (100) en parallèle de ce circuit outillage (120). Le générateur électrique (100) haute fréquence, caractérisé par une impédance ZG, est placé en parallèle dans ce circuit pour son alimentation. Ce générateur est apte à fournir un courant alternatif dans une plage de fréquence définie, généralement comprise en 10 kHz et 100 kHz. Le circuit, dit de charge, constitué par le circuit outillage et le coffret de capacités, forme un circuit oscillant de type parallèle. Pour alimenter ledit circuit, dans des conditions optimales, le générateur comporte un circuit électronique lui permettant de se caler automatiquement à la fréquence de résonance du circuit oscillant.

Comme tout phénomène de résonance, celui-ci est caractérisé par une fréquence de résonance f0 et par une largeur de pic de résonance Δf, lorsque celui-ci existe. La fréquence f0 de résonance du circuit oscillant est donnée par la relation :

$$L1.C3.\ \omega_0^2 = 1,\ \text{avec } \omega_0 = 2\,\pi\,f0$$

et la largeur de pic est fonction du rapport L1/R1. Plus cette valeur L1/R1 est élevée et plus le pic de résonance sera étroit.

Ainsi, une condition de démarrage du générateur est que celui-ci puisse se caler sur la fréquence de résonance du circuit oscillant, c'est-à-dire que cette fréquence de résonance soit suffisamment marquée par un pic de résonance étroit, et que cette fréquence de résonance soit comprise dans la gamme de fréquence d'alimentation que ledit générateur est apte à délivrer. À cette fin, un facteur de qualité $Q=L1\,\omega_0/R1$ est défini. Pour que le pic de résonance soit marqué et que le générateur soit en mesure de détecter la fréquence de résonance du circuit oscillant et de s'y caler, il est nécessaire que ce facteur de qualité Q soit supérieur ou égal à 2. Cependant, dans la plupart des cas, ledit facteur de qualité est largement inférieur à 1 de sorte que le générateur ne démarre pas et l'ajustement de la capacité C3 ne permet pas de modifier le facteur de qualité Q.

Par ailleurs, la puissance délivrée par le générateur et injectée dans le circuit outillage, est maximale lorsque l'impédance de charge est dans la plage d'impédance de sortie du générateur, soit :

$$Z1 \approx ZG$$

Or, les valeurs de R1 et de L1 sont en grande partie dictées par la géométrie de l'empreinte et des contraintes techniques de distribution de température dans ladite empreinte de sorte qu'elles ne procurent que peu de latitude de réglage.

Afin de résoudre les inconvénients de l'art antérieur, l'invention concerne un moule comportant les caractéristiques de la revendication 1.

L'insertion d'une bobine supplémentaire dans le circuit outillage offre une latitude de réglage supplémentaire. Ladite bobine n'interagissant par avec la charge, sa géométrie (longueur, nombre de spires) est dictée par l'inductance L2 à atteindre, sans conséquence sur la distribution du chauffage dans le corps de moule, la résistance R2 étant par ailleurs réduite. Ainsi, la présence de cette bobine permet d'ajuster le facteur de qualité Q du circuit outillage et de rendre celui-ci résonnant. Ladite bobine d'ajustement est associée au moule et calculée en fonction de celui-ci de sorte que ledit moule peut être connecté et fonctionner avec tout générateur du commerce. Le fonctionnement du dispositif de chauffage autonome dudit moule devient ainsi indépendant de l'environnement de production.

L'invention peut être mise en oeuvre selon les modes de réalisation avantageux exposés ci-après, lesquels peuvent être considérés individuellement ou selon toute combinaison techniquement opérante.

Selon une première variante du moule objet de l'invention la bobine d'ajustement est connectée électriquement en série avec le circuit outillage.

Selon une seconde variante du moule objet de l'invention la bobine d'ajustement est connectée électriquement en parallèle avec le circuit outillage.

Ainsi, selon le mode de connexion de la bobine d'ajustement son inductance et sa résistance peuvent être combinées de manière différente pour atteindre le résultat désiré.

Selon l'invention, l'inductance et la résistance résultantes du circuit outillage combiné à la bobine d'ajustement sont telles que le facteur de qualité Q du circuit électrique oscillant formé lorsque ledit circuit outillage connecté à la bobine est connecté à un générateur de courant haute fréquence est compris entre 2 et 5. Ainsi, le facteur de qualité est assez élevé pour permettre le démarrage du générateur sans difficulté, mais limité pour éviter un échauffement trop important des inducteurs, particulièrement lorsque ceux-ci ne font pas l'objet d'un refroidissement en opération.

Selon un mode de réalisation avantageux du moule objet de l'invention, le circuit outillage comporte deux inducteurs connectés en parallèle, et la bobine d'ajustement est connectée en série avec un des inducteurs. Ainsi, outre l'effet de ladite bobine sur le réglage du facteur de qualité, celle-ci permet également de régler le partage de l'intensité du courant entre les deux inducteurs. L'utilisation de deux inducteurs ou plus permet de mieux répartir le chauffage entre des parties du moule, plus particulièrement, lorsque, selon un mode de réalisation particulier, le moule objet de l'invention comprend deux corps de moules et que les deux inducteurs s'étendent chacun dans un corps de moule différent.

Selon ce dernier mode de réalisation, le moule objet de l'invention comprend des moyens de connexion électrique aptes à réaliser la connexion entre les inducteurs des deux corps de moule lorsque lesdits corps de moule sont rapprochés l'un de l'autre. Ainsi, il est possible de ménager une position d'ouverture large entre le poinçon et la matrice, par exemple pour y glisser un flan devant subir une opération d'estampage, sans placer de grande longueur de câbles de connexion entre les deux formes.

Avantageusement, quel que soit le mode de réalisation du moule objet de l'invention, le circuit électrique outillage comprend deux inducteurs connectés en série. Ainsi l'effet de chauffage par induction peut être mieux réparti sur la surface de la forme d'estampage, le montage en série permet par ailleurs d'assurer que la même intensité parcourt les deux inducteurs. La présence de la bobine d'ajustement permet de compenser la dégradation du facteur de qualité consécutive à la grande longueur de l'inducteur.

L'invention est décrite ci-après dans ses modes de réalisation préférés, nullement limitatifs, et en référence aux figures 1 à 5 dans lesquelles :

- la figure 1 relative à l'art antérieur illustre le montage électrique correspondant à moule équipé d'un dispositif de chauffage autonome par induction lorsque celui-ci est connecté à un générateur de courant à haute fréquence ;
- la figure 2 représente en perspective selon un point de vue de face et de dessus, un exemple de réalisation d'un moule selon l'invention comprenant un poinçon et une matrice ;

- la figure 3 montre des circuits électriques équivalents d'un moule selon des exemples de réalisation de l'invention lorsque celui-ci est connecté à un générateur de courant alternatif à haute fréquence, figures 2B et 2C selon des exemples de réalisation de l'invention ;
- la figure 4 est un schéma électrique d'un exemple de réalisation du moule objet de l'invention comprenant deux circuits d'induction parallèles ;
- et la figure 5 représente le schéma électrique d'un moule selon un exemple de réalisation de l'invention comprenant deux inducteurs connectés en parallèle et une bobine connectée en série avec l'un de ces deux inducteurs.

Figure 2, selon un exemple de réalisation du moule objet de l'invention celui-ci comprend un premier (210) corps de moule comportant une empreinte mâle formant un poinçon et un second (220) corps de moule portant une empreinte femelle formant une matrice. Les deux corps de moule comprennent chacune un circuit électrique d'induction (215, 225) formé par des conducteurs décrivant sensiblement une spire dans le volume dudit outillage. Selon cet exemple de réalisation, le poinçon (210) comprend un inducteur (215) et la matrice (220) comprend deux inducteurs (225) connectés en série. Chacun de ces inducteurs (215, 225) interagit avec le corps moule dans lequel il s'étend, en y créant des courants induits. Selon un exemple de réalisation, ledit moule (200) est constitué d'un matériau ferromagnétique de sorte que ces courants induits provoquent un échauffement dudit moule, pour l'amener rapidement à une température adaptée à la transformation d'un matériau mis en forme entre le poinçon (210) et la matrice (220). Toujours selon cet exemple de réalisation, la matrice (220) et le poinçon (210) comprennent des moyens de connexion (230) de sorte que lorsque ladite matrice (220) est approchée du poinçon, les inducteurs (225) de la matrice (220) sont connectés électriquement et selon une connexion en parallèle à l'inducteur (215) du poinçon (210) et forment ensembles un circuit inductif, lequel circuit est connecté à un générateur haute fréquence (non représenté) par des moyens (250) de connexion appropriés. Une bobine (240) dite d'ajustement, n'interagissant pas avec l'outillage est avantageusement placée dans le circuit électrique ainsi formé entre lesdits moyens de connexion (250) et le circuit outillage. Cette bobine (240) d'ajustement est constituée d'un matériau bon conducteur électrique tel que du cuivre, et conçue, en termes de diamètre et de nombre de spires, pour présenter une inductance L2 telle que le circuit électrique ainsi constitué réponde aux conditions d'efficacité énergétique et de démarrage du générateur.

En revenant à la figure 1 relative à l'art antérieur, le dispositif de chauffage par induction comprend un inducteur d'inductance Li et de résistance ohmique Ri, lequel inducteur interagit avec la charge, constituée par le corps de moule, laquelle charge présente une résistance Rch et une inductance Lch. La combinaison des caractéristiques de la charge et de l'inducteur définit les caractéristiques du circuit électrique, dit circuit outillage (120), lequel circuit outillage est connecté à un générateur (100) à haute fréquence. Un coffret de condensateurs (101) de capacité réglable est connecté en parallèle de ce circuit outillage, la valeur de la capacité est réglée à C3 selon cet exemple. Cet ensemble réunissant le condensateur et le circuit outillage définit le circuit oscillant connecté au générateur (100). Ce circuit oscillant est caractérisé par son impédance Z1, fonction de ses caractéristiques résultantes de résistance R1, d'inductance L1 et de capacité C3. Ainsi :

$$Z1 = L1/(C3.R1)$$

C3 étant la valeur à laquelle est réglée la capacité (101) du coffret de capacité réglable. L'inductance (115) résultante du circuit oscillant est définie par :

$$L1 = Li - Lch$$

La contribution majeure provenant de l'inducteur.

La résistance résultante (105) est définie par :

$$R1 = Ri + Rch$$

la contribution majeure étant apportée par la résistance de la charge.

L'inductance (115) résultante, L1, sera d'autant plus élevée que l'inducteur sera long. Ce paramètre est donc fortement influencé par la géométrie du dispositif, et la résistance (105) R1 sera principalement influencée par la nature de la charge et sa masse.

Dans l'exemple tel que représenté figure 2, la géométrie est contrainte par des facteurs fonctionnels liés à la forme du moule et à la répartition des températures visées dans les empreintes. Ainsi, la vérification des conditions $L1.C1.\omega_0^2 = 1$, $L1.\omega_0/R1 \geq 2$ et $Z1 \approx ZG$ ou ZG où ZG est l'impédance du générateur (100) sont difficiles à satisfaire.

Figures 3A et 3B, l'introduction d'une inductance (341, 342) complémentaire dans le circuit, entre les bornes (250) de connexion et le circuit outillage, laquelle inductance connectée soit en série (341), figure 3A, soit en parallèle (342), figure 2C, avec ledit circuit outillage, permet d'ajuster les caractéristiques du circuit oscillant de sorte que les conditions soient vérifiées, et ainsi permettre le démarrage du générateur et le fonctionnement du dispositif dans des conditions d'efficacité énergétiques optimales.

En revenant à la figure 2, la bobine (240) d'ajustement, constituée de cuivre, présente une résistance ohmique très faible de sorte que lorsque ladite bobine fait l'objet d'un montage en série sa résistance peut être négligée et pratiquement R2 = 0 pour un tel montage série. Dans le cas où la bobine (240) d'ajustement fait l'objet d'un montage en parallèle avec le circuit oscillant, la faible résistance de R2 a un effet important sur les caractéristiques de résonance du circuit oscillant et notamment sur la largeur du pic de résonance, c'est-à-dire sur le facteur de qualité Q.

Figure 3A, ainsi, dans le cas d'un montage en série, la résistance Rc du circuit est donnée par R1, R1 étant essentiellement la résistance de la charge et l'inductance du circuit Lc est donnée par la combinaison (L1 + L2). Ainsi en augmentant la valeur de l'inductance par l'inductance, L2, de la bobine (341) d'ajustement le facteur de qualité Q est augmenté, l'adaptation d'impédance et de fréquence par rapport aux caractéristiques du générateur (100) étant réalisées par la modification de la valeur de la capacité (101), c'est-à-dire sans modification du moule, livré avec sa bobine d'ajustement.

Figure 3B, dans le cas d'un montage de la bobine (342) d'ajustement en parallèle, l'inductance du circuit Lc sera donnée par la relation :

$$Lc = L1.L2/(L1 + L2)$$

Ainsi, que la bobine d'ajustement soit dans une configuration de connexion série (341) ou dans une configuration de connexion parallèle (342) dans le circuit oscillant, celle-ci permet, par l'ajustement de son inductance L2, n'induisant pas de courant dans la charge, et sa faible résistance R2, d'assurer un facteur de qualité Q adapté au démarrage d'un générateur haute fréquence. Ainsi, le circuit outillage est déterminé en fonction de la géométrie des empreintes, de la répartition de température à obtenir dans celles-ci et de la masse de l'outillage, sans se soucier de la possibilité de démarrage du générateur alimentant ledit moule et sans prendre en compte l'efficacité énergétique du chauffage en présence du générateur. La bobine d'ajustement est ensuite calculée en fonction du circuit outillage pour rendre celui-ci résonant. Avantageusement, plusieurs bobines d'ajustement combinant des couplages série et parallèle avec le circuit outillage permettent un ajustement fin des paramètres de fonctionnement du moule à chauffage autonome. Ainsi, l'utilisation d'une telle bobine d'ajustement offre une grande latitude dans la conception du moule et permet la réalisation d'un moule dont la distribution du chauffage sur la surface de l'empreinte est optimale, conduisant à des pièces moulées de meilleure qualité.

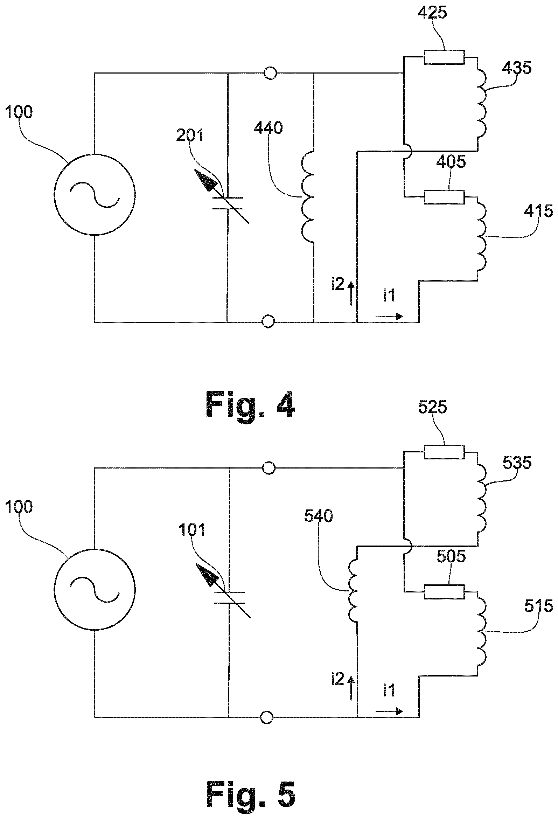

Figure 4, selon un autre exemple de réalisation du moule objet de l'invention, un premier circuit inductif, caractérisé par sa résistance (405) et son inductance (415) équivalentes, est connecté au générateur (100). À titre d'exemple, non limitatif, ce premier circuit inductif est utilisé pour le chauffage du poinçon. Ce premier circuit est parcouru par un courant i1. Un second circuit inductif, caractérisé par sa résistance (425) et son inductance (435) équivalentes, est, par exemple, utilisé pour chauffer la matrice du moule. Ce second circuit inductif est connecté au générateur (100) en parallèle du premier circuit inductif et parcouru par un courant i2. Si les caractéristiques des deux circuits d'induction sont similaires, c'est-à-dire que la longueur de leurs inducteurs et les volumes chauffés par induction sont sensiblement équivalents sur les deux circuits, alors :

$$i1 = i2 \text{ et } i1 + i2 = Q.i$$

où i est le courant délivré par le générateur et Q le facteur qualité du circuit oscillant. Dans cette configuration, l'insertion d'une bobine (440) d'ajustement dans le circuit, permet à la fois d'obtenir un facteur de qualité apte à favoriser le démarrage du générateur (100), c'est-à-dire un facteur Q au moins égal à 2, et de maintenir ce facteur Q proche de ce minimum pour éviter de faire circuler un courant d'intensité trop importante dans les inducteurs (415, 435).

Figure 5, selon un exemple de réalisation, le moule objet de l'invention comprend deux circuits inductifs parallèles de résistances (505, 525) équivalentes ou d'inductances (515, 535) très différentes. Ces différences d'impédances équivalentes proviennent, par exemple, de longueurs différentes des inducteurs utilisés pour le chauffage du poinçon et de la matrice ou de volumes les volumes chauffés différents pour chaque circuit inductif. Ainsi, en l'absence d'autres éléments, le courant électrique généré par le générateur (100) se réparti entre ces deux circuits en fonction de leurs impédances respectives, de sorte que le circuit présentant la plus faible impédance, donc a priori celui dont le volume de matière à chauffer est le plus faible, est parcouru par le courant le plus fort. L'utilisation d'une bobine d'ajustement (540), outre l'effet exposé précédemment, permet ici d'ajuster également cette répartition de l'intensité entre les deux circuits inductifs de sorte que le courant i1 parcourant le premier circuit et le courant i2 parcourant le second circuit produisent des effets de chauffage adaptés à l'application visée en fonction des caractéristiques de la charge.

Dans les conditions de résonance, l'intensité circulant dans l'inducteur est multiple selon un facteur Q de l'intensité produite par le générateur. Ainsi, il est utile d'agir sur les caractéristiques des bobines d'ajustement pour à la fois assurer une valeur minimale du facteur de qualité Q permettant le démarrage du générateur, mais aussi pour fixer la valeur maximale de ce facteur de qualité, de sorte que l'intensité parcourant les inducteurs ne risque pas de dégrader ceux-ci par leur propre échauffement.

La description et les exemples de réalisation ci-avant montrent que l'invention atteint les objectifs visés, en particulier, elle permet d'ajuster les caractéristiques du circuit outillage d'un moule à chauffage autonome de sorte que le circuit oscillant formé lorsque ledit circuit outillage est connecté à un générateur haute fréquence soit adapté au démarrage dudit générateur et permette d'atteindre une efficacité énergétique telle que le facteur Q soit supérieur à 2. L'utilisation d'une bobine d'ajustement connectée entre le circuit outillage et les bornes de connexion de ce circuit outillage, donc attachée à l'outillage permet de transférer cet outillage d'un environnement de production à un autre.

## Revendications

1. Moule (200) comportant un dispositif de chauffage autonome comprenant un générateur (100) de courant à haute fréquence, lequel moule comprend :

   a un corps (210, 220) de moule comportant un circuit de chauffage par induction, dit circuit outillage, de résistance (105, 405, 425, 505, 525) R1 et d'inductance (115, 415, 435, 515, 535) L1, lequel circuit outillage comprend un inducteur (215, 225) s'étendant dans une cavité fermée du corps de moule ;
   b. des moyens (250) de connexion pour connecter le circuit outillage au générateur (100) de courant à haute fréquence ;
   c. caractérisé en qu'il comprend une bobine (240, 341, 342, 440, 540), dite d'ajustement, de résistance R2 et d'inductance L2 n'induisant pas de courant dans le corps de moule et connectée au circuit outillage, entre ledit circuit outillage et les moyens (250) de connexion, l'inductance (115, 415, 435, 515, 535) et la résistance (105, 405, 425, 505, 525) résultantes du circuit outillage combiné à la bobine (341, 342, 440, 540) d'ajustement sont telles que le facteur de qualité Q du circuit électrique oscillant formé lorsque ledit circuit outillage connecté à la bobine, est connecté au générateur (100) de courant haute fréquence, est compris entre 2 et 5

2. Moule selon la revendication 1, **caractérisée en ce que** la bobine (341) d'ajustement est connectée électriquement en série avec le circuit outillage.

3. Moule selon la revendication 1, **caractérisé en ce que** la bobine (342) d'ajustement est connectée électriquement en parallèle avec le circuit outillage.

4. Moule selon la revendication 1, **caractérisé en ce que** le circuit outillage comporte deux inducteurs (415, 435) connectés en parallèle et que la bobine (440) d'ajustement est connectée en série avec un des inducteurs.

5. Moule selon la revendication 4, **caractérisé en ce qu'**il comprend deux corps (210, 220) de moules et que le deux inducteurs (215, 225) s'étendent chacun dans un corps de moule différent.

6. Moule selon la revendication 5, **caractérisé en ce qu'**il comprend des moyens (130) de connexion électrique aptes à réaliser la connexion entre les inducteurs (215, 225) des deux corps de moule lorsque lesdits corps de moule sont rapprochées l'un de l'autre

7. Moule selon la revendication 1, **caractérisé en ce que** le circuit d'outillage comprend deux inducteurs connectés en série.

## Patentansprüche

1. Form (200), die eine autonome Heizvorrichtung umfasst, welche einen Hochfrequenz-Stromgenerator (100) umfasst, wobei die Form umfasst:

   a. einen Formkörper (210, 220), der einen Werkzeugkreis genannten Induktions-Heizkreis mit Widerstand (105, 405, 425, 505, 525) R1 und Induktivität (115, 415, 435, 515, 535) L1 umfasst, welcher Werkzeugkreis einen Induktor (215, 225) umfasst, der sich in einem geschlossenen Hohlraum des Formkörpers erstreckt;
   b. Verbindungsmittel (250) zum Verbinden des Werkzeugkreises mit dem Hochfrequenz-Stromgenerator (100);
   c. **dadurch gekennzeichnet, dass** sie eine sogenannte Anpassspule (240, 341, 342, 440, 540) mit Widerstand R2 und Induktivität L2 umfasst, die keinen Strom im Formkörper induziert und zwischen dem Werkzeugkreis und den Verbindungsmitteln (250) mit dem Werkzeugkreis verbunden ist, wobei die Induktivität (115, 415, 435, 515, 535) und der Widerstand (105, 405, 425, 505, 525), die aus dem mit der Anpassspule (341, 342, 440, 540) kombinierten Werkzeugkreis resultierend, derart sind, dass der Qualitätsfaktor Q des elektrischen Schwingkreises, der gebildet wird, wenn der mit der Spule verbundene Werkzeugkreis mit dem Hochfrequenz-Stromgenerator (100) verbunden wird, im Bereich zwischen 2 und 5 beträgt.

2. Form nach Anspruch 1, **dadurch gekennzeichnet, dass** die Anpassspule (341) elektrisch mit dem Werkzeugkreis in Reihe geschaltet ist.

3. Form nach Anspruch 1, **dadurch gekennzeichnet,**

**dass** die Anpassspule (342) elektrisch mit dem Werkzeugkreis parallel geschaltet ist.

4. Form nach Anspruch 1, **dadurch gekennzeichnet, dass** der Werkzeugkreis zwei Induktoren (415, 435) umfasst, die parallel geschaltet sind, und dass die Anpassspule (440) mit einem der Induktoren in Reihe geschaltet ist.

5. Form nach Anspruch 4, **dadurch gekennzeichnet, dass** sie zwei Formkörper (210, 220) umfasst, und dass sich die zwei Induktoren (215, 225) jeder in einem anderen Formkörper erstrecken.

6. Form nach Anspruch 5, **dadurch gekennzeichnet, dass** sie elektrische Verbindungsmittel (130) umfasst, die in der Lage sind, die Verbindung zwischen den Induktoren (215, 225) der zwei Formkörper auszuführen, wenn die Formkörper einander angenähert werden.

7. Form nach Anspruch 1, **dadurch gekennzeichnet, dass** der Werkzeugkreis zwei Induktoren umfasst, die in Reihe geschaltet sind.

**Claims**

1. Mold (200) comprising a self-contained heating device comprising a high-frequency current generator (100), said mold comprises:

   a. a mold body (210, 220) comprising an induction heating circuit, referred to as an equipment circuit, having a resistance (105, 405, 425, 505, 525) R1 and an inductance (115, 415, 435, 515, 535) L1, said equipment circuit comprises an inductor (215, 225) extending inside a closed cavity of the mold body;
   b. connection means (250) for connecting the equipment circuit to the high-frequency current generator (100);
   c. **characterized in that** it comprises a coil (240, 341, 342, 440, 540), referred to as adjustment coil, having resistance R2 and inductance L2 that does not induce current in the mold body and connected to the equipment circuit, between said equipment circuit and the connection means (250), the inductance (115, 415, 435, 515, 535) and the resistance (105, 405, 425, 505, 525) resulting from the equipment circuit combined with the adjustment coil (341, 342, 440, 540) are such that the quality factor Q of the oscillating electrical circuit formed when said equipment circuit connected to the coil, is connected to the high-frequency current generator (100), is between 2 and 5.

2. Mold according to claim 1, **characterized in that** the adjustment coil (341) is electrically connected in series with the equipment circuit.

3. Mold according to claim 1, **characterized in that** the adjustment coil (342) is electrically connected in parallel with the equipment circuit.

4. Mold according to claim 1, **characterized in that** the equipment circuit comprises two inductors (415, 435) connected in parallel and that the adjustment coil (440) is connected in series with one of the inductors.

5. Mold according to claim 4, **characterized in that** it comprises two mold bodies (210, 220) and that the two inductors (215, 225) each extend in a different mold body.

6. Mold according to claim 5, **characterized in that** it comprises electrical connection means (130) able to create the connection between the inductors (215, 225) of the two mold bodies when said mold bodies are brought close to one another.

7. Mold according to claim 1, **characterized in that** the equipment circuit comprises two inductors connected in series.

**Fig. 1**

(art antérieur)

**Fig. 2**

**Fig. 3**

**Fig. 4**

**Fig. 5**

**EP 2 742 773 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1894442 A
- US 1948704 A